Europäisches Patentamt

European Patent Office

Office européen des brevets

(19)

(11) Veröffentlichungsnummer: **0 129 642**
**B1**

(12) **EUROPÄISCHE PATENTSCHRIFT**

(45) Veröffentlichungstag der Patentschrift:
**22.06.88**

(21) Anmeldenummer: **84102847.5**

(22) Anmeldetag: **15.03.84**

(51) Int. Cl.⁴: **F 16 K 17/38**, F 16 K 27/06,
F 16 K 5/06, F 16 K 27/00

(54) Sicherheits-Kugelhahn mit Schmutzfang-Schaltkugel.

(30) Priorität: **23.03.83 CH 1571/83**

(43) Veröffentlichungstag der Anmeldung:
**02.01.85 Patentblatt 85/1**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**EP - A - 0 051 214**
**EP - A - 0 073 484**
**DE - A - 1 954 926**
**DE - A - 3 126 214**
**DE - B - 1 779 196**
**FR - A - 2 498 282**
**GB - A - 1 539 637**
**US - A - 3 101 853**
**US - A - 3 726 299**
**US - A - 4 020 864**
**US - A - 4 270 849**
**US - A - 4 275 754**

(73) Patentinhaber: **ZWEIFEL AG Maschinenbau/Werkzeuge, Binzstrasse 32, CH-8620 Wetzikon (CH)**

(72) Erfinder: **Wilhelm, Anny, Juraweg 8, CH-5600 Lenzburg (CH)**
Erfinder: **Weitzel, Kurt, Juraweg 8, CH-5600 Lenzburg (CH)**

(74) Vertreter: **Kulhavy, Sava, Dipl.-Ing., Patentanwaltsbüro S.V. Kulhavy Postfach 450 Kornhausstrasse 3, CH-9001 St. Gallen (CH)**

## Beschreibung

Die vorliegende Erfindung betrifft einen Kugelhahn mit einem Gehäuse, das über wenigstens einen Eintrittsnippel und über wenigstens einen Austrittsnippel an ein Rohrleitungsnetz anschliessbar ist, mit einem Schaltkörper, der im Hahngehäuse drehbar gelagert ist, der etwa kugelförmig ist und der neben einer Durchgangsbohrung eine seitliche Vertiefung aufweist, und mit einer Schaltwelle, welche an den Schaltkörper einerends angeschlossen ist und welche durch die Wand des Hahngehäuses hindurchgeht.

Ein Kugelhahn dieser Gattung ist in EP-A 0 051 214 offenbart. Dieser Kugelhahn ist aus Kunststoff und er ist für Wasserleitungen bestimmt. Das Gehäuse dieses Wasserhahnes ist im wesentlichen zylinderförmig, wobei eine der Endpartien desselben einen vergrösserten Durchmesser aufweist. Die Mündung des anderen und einen kleineren Innendurchmesser aufweisenden Rohranschlusses, die sich im Inneren des Gehäuses befindet, ist von einer ersten Dichtung umgeben. Die Innenseite dieser Dichtung ist derart geformt, dass der Schaltkörper darauf dichtend aufliegen kann. Es ist ein Nippel vorgesehen, der sich im erweiterten Endabschnitt des Gehäuses einerseits befindet. Die Stirnseite dieses Endes des Nippels ist mit einer zweiten Dichtung versehen, die gleich wie die erstgenannte Dichtung ausgeführt ist. Zwischen diesen Dichtungen befindet sich der kugelförmige Schaltkörper. Mit Hilfe einer Überwurfmutter kann der Nippel gegen den Schaltkörper angedrückt werden, so dass eine zwar gewünschte aber nicht selbständig nachstellbare Grösse des Anpressdruckes zwischen dem Schaltkörper und den Dichtungen eingestellt werden kann. Der Schaltkörper ist mit einer Durchgangsbohrung versehen. Da der Schaltkörper im wesentlichen kugelförmig ist, weist er im Bereich der Mitte der Länge dieser Bohrung dicke Wände auf. Die einzelnen Bestandteile dieses Wasserhahnes werden durch Giessen hergestellt. Je dicker eine Wand ist, um so grösser ist die Schrumpfung des Materials beim Abkühlen desselben. Um Deformationen der dicken Wandpartien des kugelförmigen Schaltkörpers wirksam zu reduzieren, sind diese Wandpartien mit Vertiefungen versehen, welche derart geformt und angeordnet sind, dass diese Wandabschnitte eine möglichst gleichmässige Dicke aufweisen.

In FR-A 2 498 282 ist ein ebenfalls aus Kunststoff angefertigter Kugelhahn offenbart, dessen Schaltkörper Vertiefungen von eckigem Querschnitt aufweist. Im übrigen ist dieser Kugelhahn ganz anders ausgebildet als der gerade besprochene, bekannte Kugelhahn. Wenn die Stellung des Schaltkörpers geändert werden soll, dann wird ein Schlüssel durch einen der Anschlussnippel in die entsprechende Vertiefung eingesteckt und mit Hilfe dieses Schlüssels wird der Schaltkörper wie gewünscht verstellt. Ein solcher Kugelhahn hat unter anderem den Nachteil, dass die Leitung vom jeweiligen Nippel entfernt werden muss, wenn der Schlüssel in die diesem Nippel gegenüberstehende Vertiefung eingesteckt werden soll.

Es ist auch ein Kugelhahn bekannt (US-A 4 020 864), bei dem der Eintrittsraum im Hahngehäuse gegenüber der Umgebung desselben mit Hilfe einer Dichtung abgedichtet wird, die auf dem Schaltkörper aufliegt und mit Hilfe eines Federringes auf diesen angedrückt wird. Die äussere Randpartie dieses Federringes wird unter Zwischenlage eines Isolierringes gegen das Hahngehäuse angedrückt.

Der Erfindung liegt die Aufgabe zugrunde, einen Kugelhahn, vor allem für Gasleitungen, anzugeben, der in der Industrie wie auch im Haushalt als Gas-Sicherheits-Kugelhahn die grösstmögliche Sicherheit bietet und in dem auf Wunsch auch eine feuersichere elektrische Trennstelle eingebaut sein kann.

Diese Aufgabe wird beim Kugelhahn der eingangs genannten Gattung erfindungsgemäss so gelöst, wie dies im kennzeichnenden Teil des Anspruchs 1 definiert ist.

Nachstehend werden Ausführungsbeispiele der vorliegenden Erfindung anhand der beiliegenden Zeichnungen näher erläutert. Es zeigt:

Fig. 1 in einem vertikalen und quer zur Durchlassöffnung geführten Schnitt den Schaltkörper des vorliegenden Hahnes,

Fig. 2 in einem vertikalen Halbschnitt eine erste Ausführungsform der Armatur des vorliegenden Hahnes,

Fig. 3 in einem vertikalen Halbschnitt eine zweite Ausführungsform der Armatur des vorliegenden Hahnes, welche eine elektrische Trennstelle aufweist,

Fig. 4 teilweise im Schnitt eine erste Ausführungsform des Schalthebels des vorliegenden Hahnes und

Fig. 5 ebenfalls teilweise im Schnitt eine zweite Ausführungsform des Schalthebels mit einer Thermosicherung.

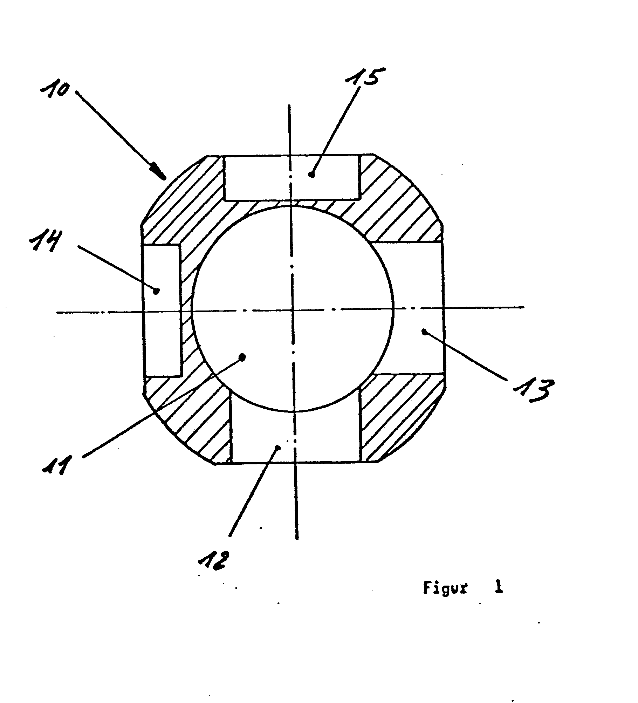

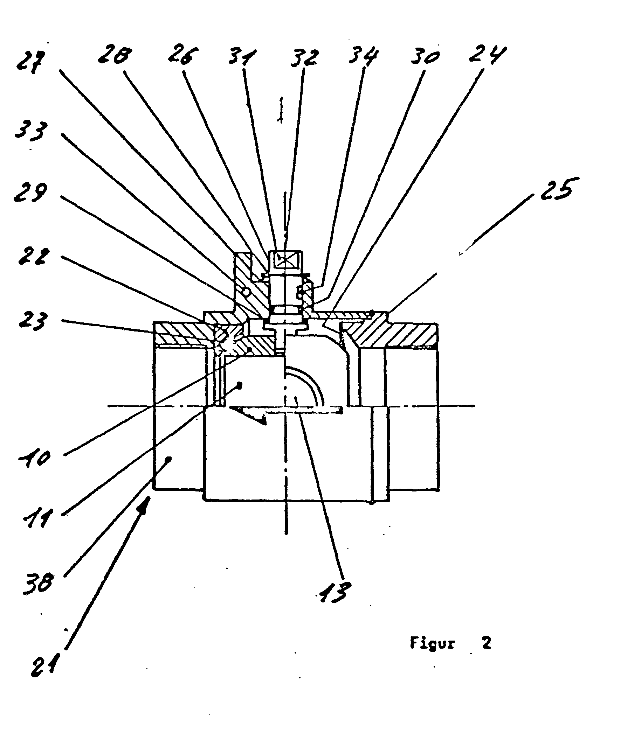

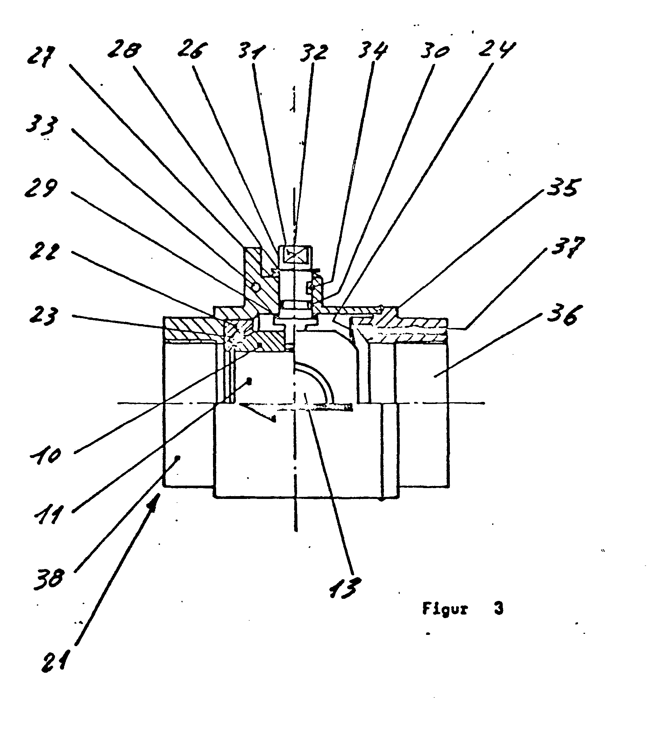

Der vorliegende Kugelhahn, der in Fig. 2 und 3 in geöffneter Stellung dargestellt ist, weist ein Gehäuse 21 auf, das über einen Eintrittsnippel 25 und einen Austrittsnippel 38 an ein Rohrleitungsnetz (nicht dargestellt) anschliessbar ist. Im Hahngehäuse 21 ist ein Schaltkörper bzw. Hahnküken 10 drehbar gelagert. In einen Antriebsschlitz 15 (Fig. 1) im Schaltkörper 10 greift eine Schaltwelle 26 ein, die durch die Oberwand des Hahngehäuses 21 hindurchgeht. Dieser Abschnitt des vorliegenden Kugelhahnes kann auch als Armatur bezeichnet werden.

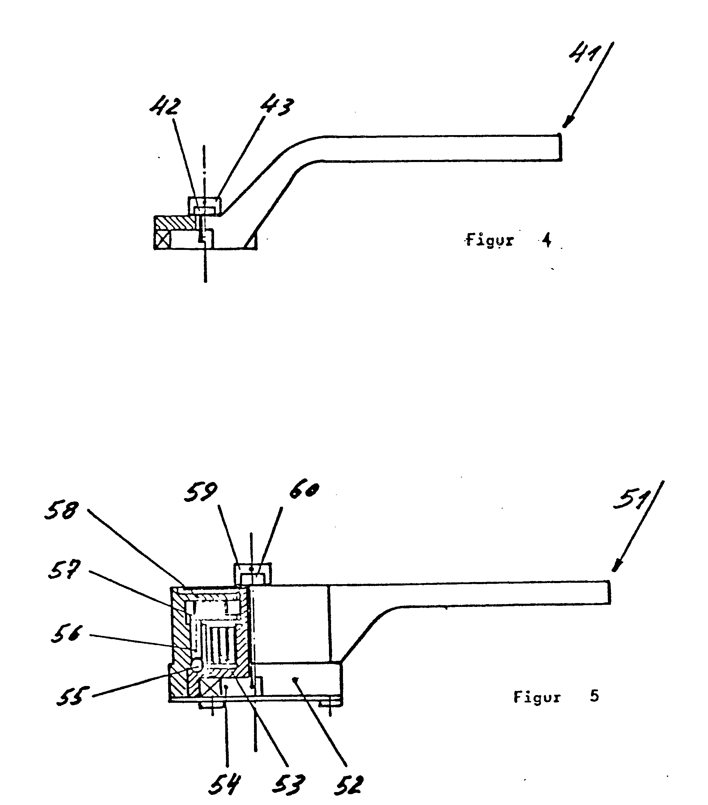

Der Kugelhahn umfasst ferner einen Schalthebel 41 (Fig. 4) bzw. 51 (Fig. 5), der auch als Bedienungshebel bezeichnet werden kann. Dieser ist auf dem aus dem Gehäuse 21 der Armatur ragenden Ende der Schaltwelle 26 aufgesetzt. Der Bedienungshebel 41 bzw. 51 weist einen etwa schalenförmigen Aussenteil sowie einen Schaltgriff auf, die mit 52 bezeichnet sind. Diese Bestandteile des Bedienungshebels 41 können als ein Gussstück aus Leichtmetall, wie z.B. aus Aluminium, ausgeführt sein. Der Bedienungshebel 41 bzw. 51 it mit Hilfe einer Befestigungsschraube 42 bzw. 60 an die Schaltwelle 26 anschliessbar. Der Kopf dieser Schraube ist mit Hilfe einer Plomben-Napfscheibe 43 bzw. 59 verdeckt.

Das aus der Oberwand des Gehäuses 21 ragende Ende der Welle 26 ist mit Abflachungen 31 versehen, welche in eine dementsprechend geformte Öffnung im Bedienungshebel 41 bzw. 51 passen. Zugleich zeigen diese Abflachungen 31 die Durchgangsrichtung des Schaltkörpers 10 an. In dieser Endpartie der Welle 26 ist eine Gewindebohrung 32 ausgeführt, in welcher die Schraube 42 bzw. 60 eingeschraubt ist. In der unmittelbaren Nähe der Mündung der Öffnung in der Oberwand des Gehäuses 21 ist in der Welle 26 eine umlaufende Rille ausgeführt, in welcher eine durch eine Wellensicherung 28 gehaltene Tellerfeder 27 sitzt. Das gegenüberliegende und sich somit im Gehäuse 21 befindliche Ende der Schaltwelle 26 ist mit einem Konus versehen. Dieser Konus steckt in einem Sitz in der inneren Mündung der genannten Gehäuseöffnung. Da die Tellerfeder 27 einen Zug auf die Schaltwelle 26 ausübt, wird der Konus gegen den Sitz gepresst, so dass eine Axialdichtung 29 an der Welle 26 vorhanden ist.

Die in der Gehäuseöffnung vorhandene Partie der Schaltwelle 26 ist mit einer sich in der Umfangsrichtung der Welle 26 erstreckenden Nut versehen, in welcher ein in der Öffnungswand eingesetzter Stift liegt. Die Länge der Nut begrenzt die Bewegungsbahn der Welle 26, so dass diese Nut und dieser Stift eine Schaltwegbegrenzung 34 darstellen. Zwischen diesem Schaltwegbegrenzer 34 und der Axialdichtung 29 befindet sich eine Radialdichtung 30, welche eine in der Welle 26 eingesetzte Dichtung enthält. Der Hals des Gehäuses 21, in dem die Lageröffnung für die Schaltwelle 26 ausgebildet ist, weist eine Plombieröffnung 33 auf.

Das untere Ende der Schaltwelle 26, das sich im Gehäuse 21 befindet, weist ebenfalls parallel verlaufende Abflachungen auf. Dieses Ende der Schaltwelle 26 liegt im bereits erwähnten Antriebsschlitz 15, der in der Oberwand des Schaltkörpers 10 ausgeführt ist.

Die Form des Schaltkörpers 10 erinnert an eine Kugel, bei welcher jeweils zwei gegenüberliegende Kugelabschnitte entfernt worden sind. Folglich weist ein solcher Schaltkörper 10 sechs plane Wände oder wenigstens Teile solcher auf, an deren Übergängen Abschnitte (Fig. 1) der ursprünglichen Kugelform weiterhin vorhanden sind. Der Schaltkörper 10 weist eine Durchgangsbohrung 11 auf, durch welche Gas strömen kann, wenn der Hahn offen ist. Weitere Öffnungen 12 und 13 sind im Bodenbereich bzw. in einer der Seitenwände des Schaltkörpers ausgeführt. Diese Zusatzbohrungen können von Nutzen sein, wenn der Kugelhahn Anschlussnippel im Bodenbereich bzw. in einer der Seitenwände des Gehäuses 21 (nicht dargestellt) aufweist. Der Schaltkörper 10 weist ein Sackloch 14, dessen Zweck im Nachstehenden noch näher beschrieben sein wird.

Vor der Mündung des Austrittsnippels 38 befindet sich im Gehäuse 21 eine Dichtung. Diese enthält einen Ring 23 aus einem weichen Material, der einen etwa dreieckförmigen Querschnitt aufweist. Dieser weiche Ring 23 ist in einer die Mündung des Austrittsnippels 38 umgebenden Nut eingesetzt. Im Bereich dieses Ringes 23, der durch die Hypothenuse des Querschnitts desselben definiert ist, ist ein weiterer Ring 22 aus einem Metall, z.B. aus Messing, eingesetzt. Dieser Metallring 22 und das Material des weichen Ringes 23 im Bereich der Querschnitthypothenuse liegen auf der Schaltkugel 10 auf und bewirken eine Abdichtung des Bereiches des Austrittsnippels 38 gegenüber dem Bereich des Eintrittsnippels 25.

Eine tellerförmige Feder 24 befindet sich im gegenüberliegenden Endbereich des Gehäuses 21. Die dem Inneren des Gehäuses 21 zugewandte Kante der Öffnung in der flachen Feder 24 liegt auf dem dem Eintrittsnippel 25 zugewandten Kugelabschnitt des Schaltkörpers 10 auf. Die Aussenseite der äusseren Randpartie der Tellerfeder 24 stützt sich auf einem umlaufenden Vorsprung des Eintrittsnippels 25 ab, wobei der Eintrittsnippel 25 mit Hilfe einer Schweissnaht am Gehäuse 10 befestigt ist.

Da die Tellerfeder 24 auf dem ebenfalls metallenen Schaltkörper 10 unmittelbar aufliegt, wobei sie andernends mit dem Gehäuse 21 aus Metall elektrisch leitend verbunden ist, können allfällige elektrostatische Ladungen vom Schaltkörper 10 über die Tellerfeder 24 ins Erdreich abgeleitet werden.

In wenigstens einer der Seitenwände des Schaltkörpers 10 ist, wie bereits erwähnt worden ist, das Sackloch 14 ausgeführt. Bekanntlich enthält Gas Staub, der sich an den Wänden der Rohre des Gehäuses 21 sowie des Schaltkörpers 10 ansetzt. Die Dichtungen 22 und 23 liegen auf den kugelförmigen Übergangsabschnitten des Schaltkörpers 10 dicht auf, um eine gasdichte Trennstelle zwischen dem Eintrittsnippel 25 und dem Austrittsnippel 38 zu bilden. Wenn der Schaltkörper 10 durch die Betätigung des Hebels 41 bzw. 51 aus einer seiner Stellungen in eine andere Stellung bewegt wird, dann streifen die Dichtungen 22 und 23 den sich auf der Oberfläche des Schaltkörpers 10 befindlichen Staub ab. Da die Staubpartikeln sehr hart sind, unterliegen vor allem diese Dichtungen 22 und 23 einem sehr starken mechanischen Verschleiss. Dieser Verschleiss ist dem Weg direkt proportional, über welchen die Staubpartikeln durch die Dichtungen 22 und 23 vor sich geschoben werden.

Beim Drehen des Schaltkörpers 10 fallen die durch die Dichtungen 22 und 23 abgestreiften und vor diesen geschobenen Staubpartikeln nach einem nur kurzen Weg auf der Oberfläche der Kugel 10 in das Innere des Sackloches 14 hinein. Die Dichtungen 22 und 23 bewegen sich dann über diesem Sackloch 14 frei weiter, d.h. ohne jegliche Abnutzung, bis sie am Ende des Sackloches 14 mit der Wand der Kugel 10 wieder in Kontakt gelangen. Der Weg von dieser Kontaktstelle bis zur Endlage der Dichtungen 22 und 23 auf der Kugel 10, entsprechend einer der zwei möglichen Grundstellungen des Schaltkörpers 10, ist jedoch sehr kurz, so dass kein nennenswerter Verschleiss der Dichtungen 22 und 23 dabei erfolgen kann. Der abgestreifte Schmutz sammelt sich auf der Unterwand des Sackloches 14, wenn sich der Hahn in der dargestellten horizontalen Lage befindet. Dieser Schmutz fällt somit nicht bis in den Bodenbereich des Gehäuses 21, wo sich ebenfalls Abschnitte der Dichtungen 22 und 23 befinden, welche durch die Anhäufung von Schmutz in diesem Bodenbereich einem besonders starken Verschleiss ausgesetzt wären.

Während des Überganges des Schaltkörpers 10 aus der einen in die andere seiner Grundstellungen, strömt das Gas während einer kurzen Zeitspanne auch durch das Sackloch 14. Der sich in dem Sackloch 14 befindliche Schmutz wird hierbei durch das Gas aus dem Sackloch 14 ausgeblasen.

Gemäss Fig. 3 ist der Eintrittsnippel 25 mit einer elektrischen Trennstelle ausgeführt. Der Nippel 25 weist eine etwa zylinderförmige Aussenhülse 35 aus Metall auf, die mit dem genannten umlaufenden Vorsprung zum Abstützen der Tellerfeder 24 versehen ist. In dieser Aussenhülse 35 befindet sich eine Innenhülse 36, die ebenfalls aus einem Metall ist, wobei diese mit einem Innengewinde zum Anschluss einer Rohrleitung (nicht dargestellt) versehen ist. Zwischen diesen zwei koaxial angeordneten Hülsen bzw. Büchsen 35 und 36 ist eine praktisch zylinderförmige Schicht 37 aus einem Isoliermaterial derart ausgebildet, dass zwischen den zwei Büchsen 35 und 36 kein elektrischer Kontakt bestehen kann. Das Material dieser Schicht 37 muss sowohl elektrisch isolierend als auch feuerfest sein. Diese Eigenschaften weisen beispielsweise keramische Materialien auf.

Fig. 4 zeigt eine einfache Ausführungsform des Schalthebels 41, bei dem die Richtung des Schaltgriffes 52 die Stellung des Schaltkörpers 10 anzeigt. Dies deswegen, weil zwischen diesen eine feste Koppelung über die Schaltwelle 26 besteht.

Der Schalthebel 51 gemäss Fig. 5 weist dagegen eine Thermosicherung auf, so dass der Schaltkörper 10, beispielseise im Brandfall, verstellt werden kann, ohne dass der Schaltgriff 52 bewegt werden muss. Der Deckel des etwa schalenförmigen Aussenteiles des Schaltgriffes 52 befindet sich oben und in dieser Schale ist ein Kupplungsstück 54 untergebracht. Dieses Kupplungsstück 54 weist eine Bodenpartie und einen Stiel auf, der sich von dieser Bodenpartie weg in Richtung gegen den Boden des Schaltgriffes 52 erstreckt. Zwischen diesem Stiel und der Seitenwand der Schaltgriffschale befindet sich eine Spiralfeder 53, deren Enden in diesen Teilen 52 und 54 des Schalthebels 51 eingesetzt sind.

In der Unterseite der Bodenpartie des Kupplungsstückes 54 ist eine Öffnung zur Aufnahme des oberen Endes der Schaltwelle 26 ausgeführt.

Im Umfangsbereich der Bodenpartie des Kupplungsstückes 54 ist wenigstens eine Vertiefung in der Oberseite der Bodenpartie ausgeführt. Diese Vertiefung ist zur Aufnahme der Kugel 55 einer Rastkupplung bestimmt. Auf dieser Kugel 55 ist ein Bolzen 56 abgestützt, auf welchen eine Scheibe 57 wirkt. Zwischen dieser Scheibe 57 und dem Deckel der Griffschale befindet sich ein Element 58 aus einem Material, das bei jener Temperatur schmilzt, bei welcher die Rastkupplung auslösen soll. Im Normalzustand ist die Spiralfeder 53 vorgespannt und die Rastkupplung hindert diese daran, dass sie sich entspannt. Dies kann nur dann erfolgen, nachdem das Material des Thermoelementes 58 weich geworden oder sogar geschmolzen ist. Während des Entspannens der Spiralfeder 53 wird das Kupplungsstück 54 gedreht und der mit diesem gekoppelte Schaltkörper 10 wird in die Schliessstellung gebracht.

Die erforderliche Abdichtung wird beim vorliegenden Hahnen dadurch erreicht, dass im Kugelhahnengehäuse 21 neben der weichen Dichtung 23 die auf die Schaltkugel 10 genau angepasste Metalldichtung 22 eingebaut ist. Die Tellerfeder 24 drückt die Schaltkugel 10 mit konstanter Kraft in Richtung Abdichtung 22, 23. Der mechanische Verschleiss der Dichtungen 22 und 23 wird ständig durch automatisches Nachstellen mittels der Tellerfeder 24 aufgehoben. Da die Tellerfeder als Bimetall ausgebildet ist, nimmt die Federkraft derselben bei Temperaturanstieg nicht ab, sondern konstant zu, was die Sicherheit der Abdichtung erhöht. Die Bedingung feuersicher ist somit erfüllt. Da die Tellerfeder 24 gleichzeitig als Kontaktring zwischen der Schaltkugel 10 und dem Kugelhahnengehäuse 21 dient, werden elektrostatische Ladungen an das Gehäuse 21 und dann ins Erdreich abgeleitet.

Damit Schmutz von der Schaltkugel 10 nicht auf die Dichtungen 22 und 23 fallen kann, erhält die Schaltkugel neben den Durchgangsbohrungen 11 und 12 von unten und von hinten die Zusatzbohrung 13. Auf der Dichtseite wirkt die Vertiefung 14 als Schmutzfänger.

Die Schaltwelle 26 ist nach oben durch die Axialdichtung 29 und durch die Radialdichtung 30 abgedichtet. Die Tellerfeder 27 auf der Schaltwelle 26, die ebenso als Bimetall ausgebildet sein kann, ist durch die Wellensicherung 28 auf der Schaltwelle 26 gehalten und am Gehäuse 21 abgestützt. Somit steht auch die Schaltwelle 26 unter ständiger Zugkraft und auch hier wird der Dichtungsverschleiss automatisch nachgestellt. Dadurch, dass die Tellerfeder 24 bereits durch die Schaltwelle 26 gehalten ist und sich zwischen der Schaltwelle 26 und dem Gehäuse 21 eine Schaltbegrenzung befindet, bleibt dieser Kugelhahn auch bei abgezogenem Schalthebel 41 bzw. 51 ein Sicherheitskugelhahn. Ob mit oder ohne Schalthebel ist der Kugelhahn wegen der Plombieröffnung 33 jederzeit plombierbar. Wird der Kugelhahn mit einem einfachen Schalthebel 41 geliefert, so kann dieser jederzeit und mit einfachsten Mitteln durch den Thermo-Schalthebel 51 ersetzt werden.

Die Spiralfeder 53 wird aufgezogen und die Kugel-Rastkupplung verhindert dann ein ungewolltes Auslösen. Die Rastkupplung ist unempfindlich gegen Temperaturschwankungen und gegen Schläge. Das Thermoelement ist jeweils auf eine feste Schalttemperatur eingestellt. Die Schalttemperatur kann zwischen ca. 60°C und ca. 300°C liegen. Die Schaltgenauigkeit liegt in jedem Fall bei plus/minus 5%.

Die feuersichere elektrische Trennstelle wird dadurch erreicht, dass der Anschlussnippel 25 an der Eingangsseite des Kugelhahns zwei metallische Einzelteile 35 und 36 enthält. Diese sind mit der gasdichten Keramikmasse 37 über einen Zwischenraum, der dem Spannungsabstand entspricht, miteinander verbunden. Diese Verbindungs- und Isoliermasse ist temperaturbeständig von minus 180°C bis plus 1500°C.

Da der Bedienungshebel 51 auf dem oberen Ende der Welle 6 bloss aufgesetzt ist, kann dieser ohne weiteres weggenommen und durch einen anderen, beispielsweise durch den Bedienungshebel 41 gemäss Fig. 4 ersetzt werden. Die genannte Massnahme ermöglicht auch, den Bedienungshebel 51 um 180° versetzt auf der Welle 26 zu montieren, was beispielsweise bei Reparaturen von Gasleitungen eine erhöhte Sicherheit mit sich bringt, insbesondere wenn die Armatur in einer Steigleitung eingeschaltet ist.

**Patentansprüche**

1. Kugelhahn mit einem Gehäuse (21), das über wenigstens einen Eintrittsnippel (25) und über wenigstens einen Austrittsnippel (38) an ein Rohrleitungsnetz anschliessbar ist, mit einem Schaltkörper (10), der im Hahngehäuse (21) drehbar gelagert ist, der etwa kugelförmig ist und der neben einer Durchgangsbohrung (11) eine seitliche Vertiefung aufweist, und mit einer Schaltwelle (26), welche an den Schaltkörper einerends angeschlossen ist und welche durch die Wand des Hahngehäuses hindurchgeht, dadurch gekennzeichnet, dass die Vertiefung (14) im Schaltkörper (10), der aus einem elektrisch leitenden Material ist, als ein Sackloch ausgeführt ist, das als Schmutzfänger dient, dessen Boden flach ist und praktisch parallel zur Mündung dieser Vertiefung verläuft, dass die Wände der Vertiefung dem ganzen Umfang dieser Vertiefung entlang praktisch senkrecht zum Boden stehen, dass ein solcher Schaltkörper (10) zwischen einer Dichtung (22, 23) und einer Tellerfeder (24) im Hahnengehäuse (21) gehalten ist, dass die Tellerfeder (24) aus einem elektrisch leitenden Material ist und auf dem metallenen Schaltkörper (10) unmittelbar aufliegt und dass die äussere Randpartie der Tellerfeder (24) im Hahngehäuse (21) elektrisch leitend verankert ist, das ebenfalls aus einem elektrisch leitenden Material ist.

2. Kugelhahn nach Anspruch 1, dadurch gekennzeichnet, dass die Tellerfeder (24) derart ausgeführt ist, dass deren Anpresswirkung auf den Schaltkörper beim Aufheizen zunimmt, und dass als eine solche Feder eine Bimetallfeder verwendet ist.

3. Kugelhan nach Anspruch 1, dadurch gekennzeichnet, dass das eine Ende eines der Nippel (25) im Gehäuse (21) liegt und dass dieses Ende des Nippels (25) auf die äussere Randpartie der Tellerfeder (24) einwirkt.

4. Kugelhahn nach Anspruch 1, dadurch gekennzeichnet, dass die Dichtung, gegen welche der Schaltkörper (10) durch die Feder (24) anpressbar ist, einen metallischen Dichtungsteil (22) aufweist, dass die Innenfläche dieses Dichtungsteiles (22) an die Form der Oberfläche des Schaltkörpers (10) angepasst ist und dass in der Innenfläche dieses Dichtungsteiles (22) sich ein weiterer Dichtungsteil (23) für den Schaltkörper (10) befindet, der aus einem weichen Material ist.

5. Kugelhahn nach Anspruch 1, dadurch gekennzeichnet, dass der Schaltkörper (10) eine Zusatzbohrung (12) aufweist, die sich in jenem Bereich desselben befindet, welcher der Schaltwelle (26) gegenüberliegt, dass diese Zusatzbohrung (12) sich einerends an die Durchgangsbohrung (11) anschliesst und andernends in der Unterseite des Schaltkörpers mündet, und dass der Schaltkörper (10) mit noch einer weiteren und an diesem seitlich ausgeführten Zusatzbohrungen (13) versehen sein kann.

6. Kugelhahn nach Anspruch 1, dadurch gekennzeichnet, dass eine Axialdichtung (29) an der Innenseite des Hahngehäuses (21) zwischen diesem und der Schaltwelle (26) ausgebildet ist, dass eine Radialdichtung (30) die Schaltwelle (26) im Inneren der Gehäusewand umgibt und dass eine Feder (27) am aussen liegenden Ende der Schaltwelle (26) angebracht ist.

7. Kugelhahn nach Anspruch 6, dadurch gekennzeichnet, dass eine Schaltwegbegrenzung (34) zwischen der Schaltwelle (26) und dem Inneren der Gehäusewand ausgebildet ist, und dass das aus dem Gehäuse (21) ragende Ende der Schaltwelle (26) mit Abflachungen (31) versehen ist, die in Richtung der Durchgangsbohrung (11) zeigen und die zur Aufnahme eines Schalthebels (41 bzw. 51) dienen.

8. Kugelhahn nach Anspruch 7, dadurch gekennzeichnet, dass der Schalthebel ein einfacher Schalthebel (41) oder ein Hebel (51) mit Thermosicherung (55 bis 58) sein kann, dass ein solcher Schalthebel (41 bzw. 51) mit Hilfe einer Schraube (42 bzw. 60) auf der Schaltwelle (26) befestigt ist und dass diese Schraube mit Hilfe einer Plombier-Napfscheibe (43 bzw. 59) und einer im Gehäuse (21) ausgeführten Bohrung (33) plombierbar ist.

9. Kugelhahn nach Anspruch 8, dadurch gekennzeichnet, dass der Hebel (51) mit Thermosicherung einen Schaltgriff (52) aufweist, in dem sich ein auf der Schaltwelle (26) sitzendes Kupplungsstück (54) befindet, dass diese zwei Teile (52 und 54) mit Hilfe einer Spiralfeder (53) miteinander gekoppelt sind, dass der Hebel (51) ferner eine Rastkupplung (55) umfasst, welche ein Thermoelement (58), eine Scheibe (57), einen Bolzen (56) und eine Kugel (55) beinhaltet, und dass der Bolzen (56) und die Kugel (55) zwischen dem Thermoelement (58) und dem Kupplungsstück (54) hintereinander geschaltet sind.

10. Kugelhahn nach Anspruch 3, dadurch gekennzeichnet, dass einer der Nippel (25) mit einer feuersicheren Trennstelle versehen ist, dass diese Trennstelle einen Aussenteil (35), einen Innenteil (36) und eine dazwischen liegende Isoliermasse (37) aufweist und dass eine solche Trennstelle eine Einheit für sich bilden und in das Rohrleitungsnetz eingebaut werden kann.

## Claims

1. A plug valve having a housing (21) connectable by means of at least one inlet port (25) and by means of at least one outlet port (28) into a pipe system, further having a valve body (10) which is pivoted in the housing, which is approximately ball shaped and which is provided with a through-hole as well as with a lateral recess, and having a stem (26) the one end of which is connected to the valve body and which goes through a wall of said housing, characterised in that the recess (14) in the valve body (10), which body is made of an electrically conductive material, is carried out as a blind hole serving as dirt capture, that the top of this hole is flat and parallel to the muzzle of the recess, that the walls of the recess are along the whole periphery thereof at right angle to said top, that such a valve body ist held in the valve housing between an packing (22, 23) and a plate spring (24), that said plate spring is made of an electrically conductive material and rests immediately upon the metallic valve body (10), and that the outer marginal part of the plate spring (24) is fastened in electrically conductive manner to the housing which is also electrically conductive.

2. A plug valve according to claim 1 characterised in that the plate spring (24) is of such kind that its contact pressure upon the valve body increases when the temperature grows and that said spring is a bimetal spring.

3. A plug valve according to claim 1 characterised in that one end of one of said ports (25) is in the housing (21) and that this end of the port (25) bears upon the marginal part of the flat spring.

4. A plug valve according to claim 1 characterised in that the packing, upon which the valve body (10) bears due to said spring (24), comprises a metallic packing part (22), that the form of the internal surface of this packing part (22) matches the form of the surface of the valve body (10), that a further packing part (23) for said valve body (10) is placed in the internal surface of said first packing part (22) and that this further packing part (23) is made of a soft material.

5. A plug valve according to claim 1 characterised in that the valve body (10) is provided with an additional hole (12) which is carried out in that one part of the valve body which is opposed to the stem (26), that this additional hole (12) opens at one of its ends into the through-hole (11) whereby its other end opens into the bottom surface of the valve body, and that the valve body (10) is provided with a still further and laterally placed additional hole (13).

6. A plug valve according to claim 1 characterised in that an axial packing (29) is carried out on the internal side of the housing (21) between the wall of the housing and the stem (26), that a radial packing (30) surrounds the stem in the interior of the wall of said housing and that a spring (27) is placed on the outer end of the stem (26).

7. A plug valve according to claim 6 characterised in that means (34) for limitation of the switching movement are carried out between the stem (26) and the interior of the housing wall, that the end of the stem (26) which extends from the housing (21) is provided with flattenings (31) and that the direction of these flattenings is the same as the direction of the through-hole (11) whereby said flattenings serve for fastening an operating handle (41, 51 resp.).

8. A plug valve according to claim 7 characterised in that the operating handle can be a plain shaped handle (41) or a handle (51) provided with a thermo-cutout (55 to 58), that such a handle (41, 51 resp.) is secured by means of a screw (42, 60 resp.) on the stem (26) and that this screw can be lead-sealed by aid of a cup-shaped washer (43, 59 resp.) and of a bore (33) carried out in the housing (21).

9. A plug valve according to claim 8 characterised in that the handle (51) provided with a thermo-cutout comprises a switch lever (52) in which a coupling piece (54) is placed, that this coupling piece is placed on the stem (26), that these two parts (52, 54) are coupled together by means of a spiral spring (53), that the handle (51) further comprises a lock coupling (55) which consists of a thermoelement (51), a washer (57), a bolt (56) and a ball (55) and that the bolt (56) and the ball (55) are connected in series between the thermoelement (58) and the coupling piece (54).

10. A plug valve according to claim 3 characterised in that one of the ports (25) is provided with separation means, that this separation means comprises an outher part (35), an internal part (36) and an insulating material (37) therebetween and that such a separation means forms an integral part which can be built-in into the pipe system.

## Revendications

1. Robinet à boisseau sphérique comportant un boîtier (21) pouvant être raccordé à un réseau de conduites par au moins un raccord d'entrée (25) et par au moins un raccord de sortie (38), comportant un corps de manœuvre (10) monté en rotation dans le boîtier de robinet (21), qui a à peu près la forme d'une sphère et qui présente un creux latéral à côté d'un trou de passage (11), et comportant un arbre de commande (26) qui est raccordé à une extrémité au corps de manœuvre et qui traverse la paroi du boîtier de robinet, caractérisé en ce que le creux (14) est un trou borgne servant de capteur de saleté, pratiqué dans le corps de manœuvre (10) qui est fait dans une matière conductrice de l'électricité, le fond du trou borgne étant plat et pratiquement parallèle à l'embouchure de ce creux, en ce que les parois du creux sont pratiquement perpendiculaires au fond sur tout le pourtour du creux, en ce que ce corps de manœuvre (10) est maintenu entre un joint d'étanchéité (22, 23) et une rondelle Belleville (24) dans le boîtier de robinet (21), en ce que la rondelle Belleville (24) est réalisée dans une matière conductrice de l'électricité et repose directement sur le corps de manœuvre (10) en métal, et en ce que la partie de bordure externe de la rondelle Belleville (24) est ancrée de manière conductrice de l'électricité dans le boîtier de robinet (21) qui est également réalisé dans une matière conductrice de l'électricité.

2. Robinet à boisseau sphérique selon la revendication 1, caractérisé en ce que la rondelle Belleville (24) est réalisée de telle sorte que son effet de pressage sur le corps de manœuvre augmente lorsqu'il est chauffé et en ce que l'on utilise pour cette rondelle, un ressort bimétallique.

3. Robinet à boisseau sphérique selon la revendication 1, caractérisé en ce que l'une des extrémités de l'un des raccords (25) est disposée dans le boîtier (21) et en ce que cette extrémité du raccord (25) agit sur la partie de bordure externe de la rondelle Belleville (24).

4. Robinet à boisseau sphérique selon la revendication 1, caractérisé en ce que le joint d'étanchéité contre lequel le corps de manœuvre (10) peut être pressé sous l'effet de la rondelle (24), présente une partie d'étanchéité (22) métallique, en ce que la face interne de cette partie d'étanchéité (22) est adaptée à la forme de la surface du corps de manœuvre (10) et en ce que dans la face interne de cette partie d'étanchéité (22), se trouve une autre partie d'étanchéité (23) pour le corps de manœuvre (10) que est fait dans une matière souple.

5. Robinet à boisseau sphérique selon la revendication 1, caractérisé en ce que le corps de manœuvre (10) présente un perçage supplémentaire (12) qui se trouve dans la zone de celui-ci opposée à l'arbre de manœuvre (26), en ce que ce perçage supplémentaire (12) se raccorde par une extrémité au trou de passage (11) et débouche par l'autre extrémité sur la face inférieure du corps de manœuvre, et en ce que le corps de manœuvre (10) peut encore être pourvu d'un autre perçage supplémentaire (13) pratiqué latéralement dans celui-ci.

6. Robinet à boisseau sphérique selon la revendication 1, caractérisé en ce qu'un joint d'étanchéité axial (29) est formé sur la face interne du boîtier de robinet (21), entre celui-ci et l'arbre de manœuvre (26), en ce qu'un joint d'étanchéité radial (30) entoure l'arbre de manœuvre (26) à l'intérieur de la paroi du boîtier et en ce qu'un ressort (27) est placé à l'extrémité de l'arbre de manœuvre (26).

7. Robinet à boisseau sphérique selon la revendication 6, caractérisé en ce qu'une limitation du parcours de manœuvre (34) est formée entre l'arbre de manœuvre (26) et l'intérieur de la paroi du boîtier, et en ce que l'extrémité de l'arbre de manœuvre (26), sortant du boîtier (21), est pourvue de parties aplaties (31) qui sont dirigées vers le trou de passage (11) et qui servent à recevoir un levier de manœuvre (41 ou 51).

8. Robinet à boisseau sphérique selon la revendication 7, caractérisé en ce que le levier de manœuvre peut être un simple levier de manœuvre (41) ou un levier (51) avec protection thermique (55 à 58), en ce qu'un tel levier de manœuvre (41 ou 51) est fixé sur l'arbre de manœuvre (26) au moyen d'une vis (42 ou 60) et en ce que cette vis peut être plombée à l'aide d'une rondelle de plombage (43 ou 59) et d'un perçage (33) pratiqué dans le boîtier (21).

9. Robinet à boisseau sphérique selon la revendication 8, caractérisé en ce que le levier (51) avec protection thermique comporte une poignée de manœuvre (52) dans laquelle se trouve un élément d'accouplement (54) calé sur l'arbre de manœuvre (26), en ce que ces deux parties (52 et 54) sont assemblées entre elles au moyen d'un ressort hélicoïdal (53), en ce que le levier (51) comporte en outre un accouplement à encliquetage (55) qui contient un thermo-élément (58), une rondelle (57), un boulon (56) et une sphère (55), et en ce que le boulon (56) et la sphère (55) sont montés l'un derrière l'autre entre le thermo-élément (58) et l'élément d'accouplement (54).

10. Robinet à boisseau sphérique selon la revendication 3, caractérisé en ce que l'un des raccords (25) est pourvu d'un point d'isolement réfractaire, en ce que ce point d'isolement comporte une partie externe (35), une partie interne (36) et une masse isolante (37) placée entre elles, et en ce que ce point d'isolement peut former une unité en soi et être monté dans le réseau de conduites.

Figur 1

Figur 2

Figur 3

Figur 4

Figur 5